# EUROPEAN PATENT SPECIFICATION

(11) **EP 3 983 458 B1**
(45) Date of publication and mention of the grant of the patent: **21.08.2024**
(21) Application number: 20731961.7
(22) Date of filing: 27.05.2020
(51) Int. Cl.: C08F 220/18, C09J 133/06

(54) **POLYMERS DERIVED FROM A (METH)ACRYLATE MACROMER, ADHESIVE COMPOSITIONS, AND ARTICLES**
POLYMERE AUS EINEM (METH)ACRYLAT-MAKROMER, KLEBSTOFFZUSAMMENSETZUNGEN UND ARTIKEL
POLYMÈRES DÉRIVÉS D'UN MACROMÈRE DE (MÉTH)ACRYLATE, COMPOSITIONS ADHÉSIVES ET ARTICLES

(30) Priority: 14.06.2019 US 201962861554 P; 13.04.2020 US 202063009130 P
(43) Date of publication of application: 20.04.2022
(73) Proprietor: 3M Innovative Properties Company, Saint Paul, Minnesota 55133-3427 (US)
(72) Inventor: MOUGHTON, Adam O., Saint Paul, Minnesota 55133-3427 (US); SAHLIN, Jennifer J., Saint Paul, Minnesota 55133-3427 (US); JONES, Lucas J., Saint Paul, Minnesota 55133-3427 (US); CLAPPER, Jason D., Saint Paul, Minnesota 55133-3427 (US)
(74) Representative: Mathys & Squire
(86) International application number: PCT/IB2020/055036
(87) International publication number: WO 2020/250066

(56) References cited:
- EP-A1- 2 607 438
- US-A- 5 879 759
- US-A1- 2010 068 515
- US-A1- 2015 184 031

## Description

### Background

In electronic devices, particularly mobile electronic devices (e.g., handheld or wearable electronic devices), pressure sensitive adhesives (PSAs) are typically used to bond the cover glass (or lens) to the underlying display module of an electronic device, bond the touch sensor to the cover glass and the display, or bond the lower components of the display to the housing. The pressure-sensitive adhesives used in mobile electronic devices are usually optically clear adhesives (OCAs). For these applications (commonly referred to as electronics bonding, or e-bonding), PSAs and OCAs should have sufficiently high strength of adhesive force to properly maintain good adhesion to those components, not only when the mobile electronic devices are operating under normal conditions, but also when they are deformed by external forces (e g., bending, folding, flexing) or subjected to traumatic forces (e.g., dropping of the mobile electronic device onto a hard surface). Regarding deformation, the components of the electronic devices may be deformed when users sit in chairs while the electronic devices are in their pockets or press down on the electronic device with their hips. Under such conditions, the pressure sensitive adhesives should have a strength of adhesion sufficient to maintain the adhesion to, for example, the cover glass (sometimes referred to as anti-lifting properties). Regarding traumatic forces, the pressure sensitive adhesives should have sufficient drop/impact resistance, such that the pressure sensitive adhesive maintains adhesion of the components even when large instantaneous impacts are applied to the portable electronic devices when dropped.

Adhesives that can dissipate energies and resist delamination forces associated with high strain events (e.g., flexing and folding) and high strain rate events such as that experienced during a device drop, have gained increasing significance for the electronic device industry. The ability to produce pressure sensitive adhesives that resist de-bonding (via interfacial or cohesive failure modes) during these high impact and dynamic deformations has become a highly desired property, inclusive of traditional performance metrics such as good peel, shear, tensile adhesion, and creep resistance, amongst others, and thus has become a commercially attractive performance criterion for continued product differentiation within this competitive and fast paced market space.

Given the electronics industry's trend towards device simplification (i.e., combining layers and/or layer functions) and reducing bonding area and overall device thickness, (and moreover demanding enhanced flexibility), there exists a growing need for adhesive tapes that have good impact resistance, compliance, and recovery. Adhesives having this balance of dichotomous properties are needed, particularly in flexible and/or foldable articles.

US 5 879 759 A, US 2010/068515 A1, EP 2 607 438 A1 and US 2015/184031 A1 relate to pressure sensitive adhesive compositions (also for flexible substrates) based on acrylic copolymers from macromers/oligomers.

### Summary

In the present invention according to the appended claims, a (meth)acrylate copolymer formed from a polymerizable composition containing a (meth)acrylate macromer, an adhesive composition that is a pressure-sensitive adhesive and that contains the (meth)acrylate copolymer, and an article containing the adhesive composition are provided. The articles include a layer of the adhesive composition positioned next to a substrate. The articles can be, for example, an adhesive tape or can be part of another article that is flexible and foldable such as, for example, an electronic device that is flexible and/or foldable.

In a first aspect, a (meth)acrylate copolymer is provided that comprises monomeric units derived from a polymerizable components comprising: a (meth)acrylate macromer comprising 1) a single (meth)acryloyloxy group and 2) a poly(ethylene oxide) group, poly(propylene oxide) group, or poly(ethylene oxide-co-propyleneoxide) group, the (meth)acylate macromer having a number average molecular weight no greater than 900 Daltons and present in an amount of at least 5 weight percent based on a total weight of the polymerizable components;
an alkyl (meth)acrylate; and
a (meth)acrylate-containing carboxylic acid present in an amount no greater than 15 weight percent based on the total weight of the polymerizable components; and
a crosslinking agent that is a multifunctional (meth)acrylate monomer, a multifunctional aziridine, or a combination thereof in an amount ranging from 0.1 to 5 weight percent based on a total weight of the polymerizable components;
and wherein the (meth)acrylate copolymer has a glass transition temperature no greater than -15°C.

In a second aspect, an adhesive composition is provided that contains the (meth)acrylate copolymer described in the first aspect. In the present invention, the (meth)acrylate copolymer is crosslinked. The adhesive composition is typically a pressure-sensitive adhesive.

In a third aspect, an article is provided that includes a substrate and an adhesive composition positioned adjacent to a substrate. The adhesive composition is the same as described above in the second aspect.

The term "and/or" such as in the expression A and/or B means A alone, B alone, or both A and B.

The term "polymer" refers to homopolymers, copolymers, terpolymers, and the like. The term "copolymer" is used herein to refer to a polymeric material that is prepared from at least two different polymerizable components.

The term "polymerizable component" refers to a compound that can undergo polymerization (i.e., the compound has a polymerizable group). The polymerizable component typically has an ethylenically unsaturated group such as a (meth)acryloyl-containing group or a vinyl group that is the polymerizable group. The compounds that have a polymerizable group can be referred to as a "monomer".

As used herein, the term "macromer" refers to a monomer having a polymeric group. A macromer is a subset of the term "monomer".

The term "monomeric unit" refers to the reaction product of a polymerizable component (i.e., a monomer (including a macromer)) within the (meth)acrylate copolymer. As an example, the monomeric unit of acrylic acid 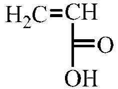 is 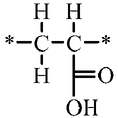 where the asterisks (*) indicate the attachment site to another group such as another monomeric unit or terminal group in the (meth)acrylate copolymer.

The term "(meth)acryloyl" refers to a group of formula CH₂=CR-(CO)- where R is hydrogen (for an acryloyl group) or methyl (for a methacryloyl group).

The term "(meth)acrylate" refers to a methacrylate and/or acrylate. Likewise, the term (meth)acrylic acid" refers to methacrylic acid and/or acrylic acid and the term "(meth)acrylamide" refers to methacrylamide and/or acrylamide.

The term "(meth)acrylate macromer" refers to a monomer having a single (meth)acryloyloxy group (i.e., a group of formula CH₂=CR-(CO)-O- where R is hydrogen or methyl) plus a poly(ethylene oxide) group, poly(propylene oxide) group, or poly(ethylene oxide-co-propylene oxide) group.

The term "poly(ethylene oxide) group" refers to a group that contains at least 3 ethylene oxide (-(C₂H₄O)-) groups and the term "polypropylene oxide) group" refers to a group that contains at least 3 propylene oxide (-(C₃H₆O)-) groups.

The term "poly(ethylene oxide-co-propylene oxide) group" contains at least 3 groups that include at least one ethylene oxide group and at least one propylene oxide group. The poly(ethylene oxide-co-propylene oxide) group is a copolymeric group.

The term "vinyl" refers to a polymerizable component that has a group CH₂=CH- but that is not part of a (meth)acryloyl group.

The term "polymerizable composition" refers to the reaction mixture that is polymerized. It includes the polymerizable components plus any other material such as a free radical initiator, chain transfer agent, antioxidant, solvent, and the like that may be included in the reaction mixture.

Herein, the term "pressure-sensitive adhesive" or "PSA" is used in its conventional manner according to the Pressure-Sensitive Tape Council, which states that pressure-sensitive adhesives are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). Central to all PSAs is a desired balance of adhesion and cohesion that is often achieved by optimizing the physical properties of the elastomer, such as glass transition temperature and modulus. For example, if the glass transition temperature (T_{g}) or modulus of the elastomer is too high and above the Dahlquist criterion for tack (storage modulus of 3 × 10⁶ dynes/cm² at room temperature and oscillation frequency of 1 Hz), the material will not be tacky and is not useful by itself as a PSA material.

Herein, the term "glass transition temperature", which can be written interchangeably as "T_{g}", of a monomer (including the macromer) refers to the glass transition temperature of the homopolymer formed from the monomer, which can be a macromer. The glass transition temperature for a polymeric material is typically measured by Dynamic Mechanical Analysis (DMA) as the maximum in tan delta (δ).

As used herein, a "flexible" refers to a substrate and/or article that can undergo roll up action with a bend radius of 200 mm or less, 100 mm or less, 50 mm or less, 20 mm or less, 10 mm or less, 5 mm or less, 4 mm or less, 3 mm or less, 2 mm or less, or 1 mm or less, without failure or visible defects, such as delamination, cracking, crazing, or haze.

As used herein, a "foldable" refers to a substrate and/or article that can undergo repeated flexing or folding, such as up to 1,000 folds, up to 10,000 folds, up to 25,000 folds, up to 50,000 folds, up to 25,000 folds, up to 100,000 folds, or even up to 200,000 folds, without failure or visible defects such as delamination, cracking, crazing, or haze. In this context, a fold is formed in a substrate or article that is relatively flat when it is bent over (i.e., folded) on itself so that one part of it covers another part. The bend radius for folding is often 200 mm or less, 100 mm or less, 50 mm or less, 20 mm or less, 10 mm or less, 5 mm or less, 4 mm or less, 3 mm or less, 2 mm or less, or 1 mm or less.

Herein, the term "comprises" and variations thereof do not have a limiting meaning where these terms appear in the description and claims. Such terms will be understood to imply the inclusion of a stated step or element or group of steps or elements but not the exclusion of any other step or element or group of steps or elements. By "consisting of" is meant including, and limited to, whatever follows the phrase "consisting of." Thus, the phrase "consisting of" indicates that the listed elements are required or mandatory, and that no other elements may be present. By "consisting essentially of" is meant including any elements listed after the phrase and limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether they materially affect the activity or action of the listed elements. Any of the elements or combinations of elements that are recited in this specification in open-ended language (e.g., comprise and derivatives thereof), are considered to additionally be recited in closed-ended language (e.g., consist and derivatives thereof) and in partially closed-ended language (e.g., consist essentially, and derivatives thereof).

The words "preferred" and "preferably" refer to embodiments of the disclosure that may afford certain benefits, under certain circumstances. However, other claims may also be preferred, under the same or other circumstances. Furthermore, the recitation of one or more preferred claims does not imply that other claims are not useful and is not intended to exclude other claims from the scope of the disclosure.

In this application, terms such as "a," "an," and "the" are not intended to refer to only a singular entity but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all the listed elements or a combination of any two or more of the listed elements.

Also, herein, all numbers are assumed to be modified by the term "about" and in certain embodiments, preferably, by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also, herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein, the term "room temperature" refers to a temperature of 20°C to 25°C or 22°C to 25°C.

The term "in the range" or "within a range" (and similar statements) includes the endpoints of the stated range.

Groupings of alternative elements or embodiments disclosed herein are not to be construed as limitations. Each group member may be referred to and claimed individually or in any combination with other members of the group or other elements found therein. It is anticipated that one or more members of a group may be included in, or deleted from, a group for reasons of convenience and/or patentability. When any such inclusion or deletion occurs, the specification is herein deemed to contain the group as modified thus fulfilling the written description of all Markush groups used in the appended claims.

When a group is present more than once in a formula described herein, each group is "independently" selected, whether specifically stated or not. For example, when more than one R group is present in a formula, each R group is independently selected.

Reference throughout this specification to "one embodiment," "an embodiment," "certain embodiments," or "some embodiments," etc., means that a specific feature, configuration, composition, or characteristic described in connection with the embodiment is included in at least one embodiment of the invention. Thus, the appearances of such phrases in various places throughout this specification are not necessarily referring to the same embodiment of the invention. Furthermore, the specific features, configurations, compositions, or characteristics may be combined in any suitable manner in one or more embodiments.

### Detailed Description

The present invention according to the appended claims provides a (meth)acrylate copolymer, an adhesive composition that contains the (meth)acrylate copolymer, and an article that contains the adhesive composition positioned adjacent to a substrate. The articles can be, for example, an adhesive tape or can be part of another article that is flexible and foldable such as, for example, an electronic device that is flexible and/or foldable.

The (meth)acrylate copolymer according to present claim 1 contains monomeric units derived from polymerizable components that include (1) a (meth)acrylate macromer comprising a single (meth)acryloyloxy group and a poly(ethylene oxide) group, a poly(propylene oxide) group, or a poly(ethylene oxide-co-propylene oxide) group, (2) an alkyl (meth)acrylate, (3) a (meth)acrylate-containing carboxylic acid and a crosslinking agent that is a multifunctional (meth)acrylate monomer, a multifunctional aziridine, or a combination thereof in an amount ranging from 0.1 to 5 weight percent based on a total weight of the polymerizable components.

The (meth)acrylate macromer has a number average molecular weight that is no greater than 900 grams/mole and is present in an amount of at least 5 weight percent based on a total weight of the polymerizable components. The (meth)acrylate-containing carboxylic acid is present in an amount no greater than 15 weight percent based on a total weight of the polymerizable components. The (meth)acrylate copolymer has a glass transition temperature no greater than -15°C.

The (meth)acrylate copolymer is used to form an adhesive composition. The adhesive composition can optionally include other components in addition to the (meth)acrylate copolymer. In many embodiments, the (meth)acrylate copolymer is crosslinked. The adhesive composition is typically a pressure-sensitive adhesive.

The adhesive composition is used in the preparation of various articles. The adhesive composition desirably has good peel adhesive strength and remains adhered to a substrate even when the article is flexed, folded, or impacted. In some embodiments, the adhesive composition is used in an electronic device including those that are flexible and/or that can be folded.

### (Meth)acrylate copolymer

The (meth)acrylate copolymer is formed from monomeric units derived from a polymerizable components comprising:
a (meth)acrylate macromer comprising 1) a single (meth)acryloyloxy group and 2) a poly(ethylene oxide) group, poly(propylene oxide) group, or poly(ethylene oxide-co-propyleneoxide) group; an alkyl (meth)acrylate;
a (meth)acrylate-containing carboxylic acid and a crosslinking agent as defined in the appended claims.

Other additional optional monomers can be included in the polymerizable components. In the present invention the (meth)acrylate copolymer is crosslinked. The crosslinking occurs by the addition of a crosslinking agent to the polymerizable components.

The polymerizable components used to form the (meth)acrylate copolymer may be free or substantially free of vinyl acetate and non-polar vinyl monomers. As used herein to describe vinyl acetate and non-polar vinyl monomers, the term "substantially free" means that the polymerizable components contain less than 1 weight percent, less than 0.5 weight percent, less than 0.2 weight percent, or less than 0.1 weight percent of these monomers.

The (meth)acrylate copolymer typically has a glass transition temperature no greater than -15°C as determined by Dynamic Mechanical Analysis. For example, the glass transition temperature can be no greater than -20°C, no greater than -25°C, no greater than -30°C, no greater than -35°C, or no greater than -40°C. The glass transition temperature is often greater than -50°C, greater than -40°C, or greater than -30°C. The (meth)acrylate copolymer preferably has a single glass transition temperature when measured using Dynamic Mechanical Analysis.

### (Meth)acrylate macromer

The (meth)acrylate macromer included in the polymerizable components used to form the (meth)acrylate copolymer has a (meth)acryloyloxy group plus a poly(ethylene oxide) group, poly(propylene oxide) group, or poly(ethylene oxide-co-propylene oxide) group, which can also be referred to as a poly(ethylene glycol), poly(propylene glycol), or poly(ethylene glycol-co-propylene glycol) groups respectively. If the macromer contains a poly(ethylene oxide) group, it can be referred to as a poly(ethylene oxide) (meth)acrylate. If the macromer contains a poly(propylene oxide) group, it can be referred to as a poly(propylene oxide) (meth)acrylate. If the macromer contains a poly(ethylene oxide-co-propylene oxide) group, it can be referred to as a poly(ethylene oxide-co-propylene oxide) (meth)acrylate, which is a copolymer.

The (meth)acrylate macromer typically has a number average molecular weight in a range of 350 to 900 Daltons. For example, the (meth)acrylate macromer has a number average molecular weight no greater than 900 Daltons, no greater than 850 Daltons, no greater than 800 Daltons, no greater than 750 Daltons, no greater than 700 Daltons, no greater than 650 Daltons, no greater than 600 Daltons, no greater than 550 Daltons, no greater than 500 Daltons, or no greater than 400 Daltons and at least 350 Daltons, at least 400 Daltons, at least 450 Daltons, or at least 500 Daltons.

The (meth)acrylate macromer is typically selected so that it is not waxy at room temperature. That is, the (meth)acrylate macromer is selected to be non-crystalline and a liquid at room temperature. The (meth)acrylate macromer often has a glass transition temperature (as measured using a homopolymer of the macromer) that is no greater than -20°C. For example, the glass transition temperature can be no greater than -30°C, no greater than -40°C, no greater than - 50°C, or no greater than -60°C. Such a low macromer glass transition temperature imparts compliance and flexibility to the (meth)acrylate copolymer and to the adhesive composition containing the (meth)acrylate copolymer.

Examples of such commercially available (meth)acrylate macromers include poly(ethylene glycol) methyl ether acrylate, such as that having a reported number average molecular weight (Mn) of 480 Daltons (available from Sigma-Aldrich) and poly(propylene glycol) acrylate, such as that having a reported number average molecular weight of 475 Daltons (available from Sigma-Aldrich). Other suitable macromers are available under the tradename BISOMER from Geo Specialty Chemicals, Ambler, PA, such as BISOMER PPA6 (polypropylene glycol) acrylate reported to have a number average molecular weight of 420 Daltons), BISOMER PEM63P HD (a mixture of poly(ethylene glycol) methacrylate and poly(propylene glycol) reported to have a number average molecular weight of 524 Daltons), BISOMER PPM5 LI (polypropylene glycol) methacrylate reported to have a number average molecular weight of 376 Daltons), BISOMER PEM6 LD (poly(ethylene glycol) methacrylate reported to have a number average molecular weight of 350 Daltons), BISOMER MPEG350MA (methoxy poly(ethylene glycol) methacrylate) reported to have a number average molecular weight of 430 Daltons), and BISOMER MPEG550MA (methoxy poly(ethylene glycol) methacrylate reported to have a number average molecular weight of 628 Daltons). Other suitable macromers are available under the tradename MIRAMER from Miwon Specialty Chemical Company, Gyeonggi-do, Korea, such as MIRAMER M193 MPEG600MA (methoxy poly(ethylene glycol) methacrylate reported to have a number average molecular weight of 668 Daltons, MIRAMER M164 (nonyl phenol poly(ethylene glycol) acrylate reported to have a number average molecular weight of 450 Daltons), MIRAMER M1602 (nonyl phenol poly(ethylene glycol) acrylate reported to have a number average molecular weight of 390 Daltons), and MIRAMER M166 (nonyl phenol poly(ethylene glycol) acrylate reported to have a number average molecular weight of 626 Daltons. Still other suitable macromers are available from Sans Esters Corporation, New York, NY such as MPEG-A400 (methoxy poly(ethylene glycol) acrylate reported to have a number average molecular weight of 400 Daltons), and MPEG-A550 (methoxy poly(ethylene glycol) acrylate reported to have a number average molecular weight of 550 Daltons. Various combinations of such macromers may be used if desired.

The polymerizable components used to form the (meth)acrylate copolymer usually contain at least 5 weight percent, at least 10 weight percent, at least 15 weight percent, at least 20 weight percent, at least 25 weight percent, at least 30 weight percent, at least 35 weight percent, at least 40 weight percent and up to 60 weight percent, up to 55 weight percent, up to 50 weight percent, up to 45 weight percent, or up to 40 weight percent of the (meth)acrylate macromer. The amount is based on the total weight of polymerizable components.

### Alkyl (meth)acrylate

The polymerizable components also include an alkyl (meth)acrylate monomer. Any suitable alkyl (meth)acrylate or mixture of alkyl (meth)acrylates can be used provided the glass transition temperature of the final (meth)acylate copolymer is sufficiently low (e.g., no greater than -15°C). Some alkyl (meth)acrylate monomers can be classified as low T_{g} monomers based on the glass transition temperature of the corresponding homopolymers. The low T_{g} monomers, as measured from the corresponding homopolymers, often have a T_{g} no greater than 20°C, no greater than 10°C, no greater than 0°C, or no greater than -10°C.

Suitable low T_{g} alkyl (meth)acrylate monomers include, but are not limited to, non-tertiary alkyl acrylates but can be an alkyl methacrylates having a linear alkyl group with at least 4 carbon atoms. Specific examples of alkyl (meth)acrylates include, but are not limited to, methyl acrylate, ethyl acrylate, n-propyl acrylate, n-butyl acrylate, n-butyl methacrylate, isobutyl acrylate, sec-butyl acrylate, n-pentyl acrylate, 2-methylbutyl acrylate, n-hexyl acrylate, cyclohexyl acrylate, 4-methyl-2-pentyl acrylate, 2-methylhexyl acrylate, 2-ethylhexyl acrylate, n-octyl acrylate, 2-octyl acrylate, isooctyl acrylate, isononyl acrylate, isoamyl acrylate, n-decyl acrylate, isodecyl acrylate, n-decyl methacrylate, lauryl acrylate, isotridecyl acrylate, n-octadecyl acrylate, isostearyl acrylate, n-dodecyl methacrylate, and combinations thereof. In some embodiments, the low T_{g} alkyl (meth)acrylates is selected from 2-ethylhexyl acrylate, isooctyl acrylate, n-butyl acrylate, 2-methylbutyl acrylate, 2-octyl acrylate, and combinations thereof.

Other alkyl (meth)acrylates that can be included in the polymerizable components are classified as high T_{g} monomers based on the glass transition temperature of the corresponding homopolymers. The high T_{g} monomers often have a T_{g} greater than 30°C, greater than 40°C, or greater than 50°C when homopolymerized (i.e., a homopolymer formed from the monomer has a T_{g} greater than 30°C, greater than 40°C, or greater than 50°C). Some suitable high T_{g} alkyl (meth)acrylate monomers include, for example, methyl methacrylate, ethyl methacrylate, n-propyl methacrylate, isopropyl methacrylate, n-butyl methacrylate, isobutyl methacrylate, sec-butyl methacrylate, tert-butyl (meth)acrylate, cyclohexyl methacrylate, isobornyl (meth)acrylate, stearyl (meth)acrylate, and 3,3,5 trimethylcyclohexyl (meth)acrylate.

The amount of the alkyl (meth)acrylate can be any suitable amount up to 95 weight percent based on the total weight of polymerizable components. The amount can be, for example, up to 90 weight percent, up to 85 weight percent, up to 80 weight percent, up to 75 weight percent, up to 70 weight percent, up to 65 weight percent, up to 60 weight percent, up to 55 weight percent, up to 50 weight percent, up to 45 weight percent, or up to 40 weight percent. The amount is often at least 25 weight percent, at least 30 weight percent, at least 35 weight percent, at least 40 weight percent, at least 45 weight percent, or at least 50 weight percent.

If the alkyl (meth)acrylate is selected to include high T_{g} monomers, the amount of this monomer is often no greater than 20 weight percent based on the total weight of polymerizable components. That is, the amount can be in a range of 0 to 20 weight percent based on the total weight of polymerizable components. If higher amounts are used, the overall T_{g} of the (meth)acrylate copolymer may be too high. The amount of the high T_{g} alkyl (meth)acrylate monomer is often no greater than 15 weight percent, no greater than 10 weight percent, or no greater than 5 weight percent. If present, the amount of the high Tg alky (meth)acrylate monomer is often at least 0.1 weight percent, at least 0.2 weight percent, at least 0.3 weight percent, at least 0.5 weight percent, or at least 1 weight percent. If the polymerizable component includes high Tg alkyl (meth)acrylate monomers, enough low T_{g} alkyl (meth)acrylate monomers is typically added to form a (meth)acylate copolymer with a T_{g} no greater than -15°C.

The alkyl (meth)acrylate monomer is typically selected to include a low Tg monomer such as those that have a T_{g} no greater than -10°C when measured as a homopolymer. For example, the polymerizable components often contain at least 40 weight percent, at least 45 weight percent, at least 50 weight percent, at least 55 weight percent, at least 60 weight percent, at least 65 weight percent, or at least 70 weight percent and up to 95 weight percent, up to 90 weight percent, up to 85 weight percent, up to 80 weight percent, up to 75 weight percent, or up to 70 weight percent low T_{g} monomer having a T_{g} no greater than -10°C when measured as a homopolymer. The amount is based on the total weight of polymerizable components.

Suitable alkyl monomers that have a T_{g} no greater than -10°C when measured as a homopolymer include, but are not limited to, 2-ethylhexyl acrylate, isooctyl acrylate, N-butyl acrylate, 2-methylbutyl acrylate, 2-octyl acrylate, and combinations thereof.

### (Meth)acrylate-containing carboxylic acid

The polymerizable component used to form the (meth)acrylate copolymer includes a (meth)acrylate-containing carboxylic acid. Exemplary (meth)acrylate-containing carboxylic acids include those selected from (meth)acrylic acid, β-carboxyethyl (meth)acrylate, 2-(meth)acryloyloxyethyl phthalic acid, 2-(meth)acryloyloxy succinic acid, and combinations thereof. In many embodiments, the (meth)acrylate-containing carboxylic acid is (meth)acrylic acid and, in some embodiments, acrylic acid.

The (meth)acrylate-containing carboxylic acid is used in an amount no great than 15 weight percent based on the total weight of the polymerizable components. Typically, if more than 15 weight percent of this acidic component is used, the resultant adhesive composition may be too stiff. The amount is often no greater than 12 weight percent, no greater than 10 weight percent, no greater than 8 weight percent, no greater than 6 weight percent, no greater than 5 weight percent, no greater than 4 weight percent, no greater than 3 weight percent, or no greater than 2 weight percent based on the total weight of the polymerizable components. The amount is often at least 0.1 weight percent, at least 0.2 weight percent, at least 0.5 weight percent, or at least 1.0 weight percent based on the total weight of polymerizable components.

### The crosslinking agent

In the appended claims the (meth)acrylate copolymer is crosslinked. Typically, such crosslinking improves durability and cohesion properties of the (meth)acrylate copolymer. In the present invention, the (meth)acrylate copolymer is crosslinked using a crosslinking agent (i.e., crosslinker) being a multifunctional (meth)acrylate monomer, multifunctional aziridine, or combinations thereof. As used with reference to the crosslinking agent, the term "multifunctional" means that there are at least two groups that can react to crosslink the (meth)acrylate copolymer. Examples of multifunctional (meth)acrylate monomer crosslinking agents include, but are not limited to, 1,3-butylene glycol diacrylate, 1,4-butanedioldiacrylate, poly(ethylene glycol) diacrylate (e.g., those having a Mw in a range of 100 to 1,000 Daltons), ethoxylated bisphenol A diacrylate, tetraethylene glycol diacrylate, trimethyloyl propane triacrylate, and 1,6-hexanediol diacrylate. Examples of aziridine crosslinking agents include 1,1'-isophthaloyl-bis(2-methylaziridine).

The polymerizable components often contain 0 to 5 weight percent of the crosslinking agent. The amount can be at least 0.1 weight percent, at least 0.2 weight percent, at least 0.3 weight percent, at least 0.5 weight percent, or at least 1 weight percent and up to 5 weight percent, up to 4 weight percent, up to 3 weight percent, up to 2 weight percent, or up to 1 weight percent based on the total weight of polymerizable components. The amount of crosslinking and/or crosslinking agent included depends on well-understood factors such as the desired degree of crosslinking and/or the relative effectiveness of the crosslinking agent in the specific system, as measured by well-known tests such as shear adhesion. Crosslinking of the polymer using such crosslinking agents may be initiated using any conventional technique, such as thermal or actinic radiation initiation.

### Optional non-acidic polar monomer

Other optional polar monomers can be included in the polymerizable components that are not acidic. For example, the non-acidic polar monomers can have a hydroxyl group, an ether (or polyether) group, or a nitrogen-containing group. Suitable nitrogen-containing groups are typically primary amido groups, secondary amido groups, tertiary amido groups, or amino groups.

Exemplary polar monomers with a hydroxyl group include, but are not limited to, hydroxyalkyl (meth)acrylates (e.g., 2-hydroxyethyl (meth)acrylate, 2-hydroxypropyl (meth)acrylate, 3-hydroxypropyl (meth)acrylate, and 4-hydroxybutyl (meth)acrylate), hydroxyalkyl (meth)acrylamides (e.g., 2-hydroxyethyl (meth)acrylamide or 3-hydroxypropyl (meth)acrylamide), ethoxylated hydroxyethyl (meth)acrylate (e.g., monomers commercially available from Sartomer (Exton, PA, USA) under the trade designation CD570, CD571, and CD572), aryloxy substituted hydroxyalkyl (meth)acrylates (e.g., 2-hydroxy-2-phenoxypropyl (meth)acrylate), 4-vinyl phenol, and hydroxy-propyl-carbamate acrylate.

Exemplary ether-containing (meth)acrylate monomers include those selected from 2-ethoxyethoxyethyl (meth)acrylate, 2-methoxyethoxyethyl (meth)acrylate, di(ethylene glycol)-2-ethylhexyl-ether acrylate, ethylene glycol-methyl ether acrylate, and combinations thereof. Suitable ether-containing (meth)acrylate monomers have a number average molecular weight less than 350 Daltons, less than 300 Daltons, or less than 250 Daltons.

Exemplary polar monomers with a primary amido group include (meth)acrylamide. Exemplary polar monomers with secondary amido groups include, but are not limited to, N-alkyl (meth)acrylamides or N-alkoxyalkyl (meth)acrylamides such as N-methyl (meth)acrylamide, N-ethyl (meth)acrylamide, N-isopropyl (meth)acrylamide, or N-octyl (meth)acrylamide. N-(3-methoxypropyl)acrylamide, or N-(isobutoxymethyl)acrylamide. Exemplary polar monomers with a tertiary amido group include, but are not limited to, N-vinyl carbazole, N-vinyl caprolactam, N-vinyl-2-pyrrolidone, N-vinyl azlactone, 4-(meth)acryloylmorpholine, N-vinylimidazole, ureido (meth)acrylate, and N,N-dialkyl (meth)acrylamides such as N,N-dimethyl (meth)acrylamide, N,N-diethyl (meth)acrylamide, N,N-dipropyl (meth)acrylamide, and N,N-dibutyl (meth)acrylamide.

Polar monomers with an amino group include various N,N-dialkylaminoalkyl (meth)acrylates and N,N-dialkylaminoalkyl (meth)acrylamides. Examples include, but are not limited to, N,N-dimethyl aminoethyl (meth)acrylate, N,N-dimethylaminoethyl (meth)acrylamide, N,N-dimethylaminopropyl (meth)acrylate, N,N-dimethylaminopropyl (meth)acrylamide, N,N-diethylaminoethyl (meth)acrylate, N,N-diethylaminoethyl (meth)acrylamide, N,N-diethylaminopropyl (meth)acrylate, and N,N-diethylaminopropyl (meth)acrylamide.

In some embodiments, the polymer of the adhesive composition of the present disclosure includes monomeric units derived from both a (meth)acrylate-containing carboxylic acid and a N-containing polar monomer (e.g., a monomer with a primary amido group, a secondary amido group, a tertiary amido group, or an amino group). This combination of monomers can provide an adhesive composition that has excellent high impact resistance, or drop resistance properties, and excellent bond making ability (i.e., good tack, instant bond formation). These performance criteria are often highly desirable for applications within e-bonding and industrial market segments.

The amount of the optional non-acidic polar monomer is often no greater than 20 weight percent, no greater than 15 weight percent, no greater than 10 weight percent, or no greater than 5 weight percent based on the total weight of polymerizable components. If present, the amount of this monomer is often at least 0.1 weight percent, at least 0.5 weight percent, at least 1 weight percent, at least 2 weight percent, or at least 5 weight percent.

In many embodiments, the total combined weight of the acidic monomer (i.e., the (meth)acrylate-containing carboxylic acid) and the optional non-acidic polar monomer is no greater than 35 weight percent, no greater than 30 weight percent, no greater than 25 weight percent, no greater than 20 weight percent, no greater than 15 weight percent, no greater than 10 weight percent, or no greater than 5 weight percent based on a total weight of polymerizable components. The amount of this monomer is often at least 0.2 weight percent, at least 0.5 weight percent, at least 1 weight percent, at least 2 weight percent, or at least 5 weight percent.

### Polymerization Process

The (meth)acrylate copolymer can be prepared from the polymerizable components using any known polymerization methods including those activated thermally or by actinic radiation (e.g., actinic radiation in the visible and/or ultraviolet region of the electromagnetic spectrum). A free radical initiator is typically combined with the polymerizable components. Other optional components such as a chain transfer agent, antioxidant, solvent, and the like may be included in the polymerizable composition.

A free radical initiator, which can be either a photoinitiator or a thermal initiator, is typically used to form the (meth)acrylate copolymer. Multiple photoinitiators or multiple thermal initiators can be used. The amount of the free radical initiator can influence the weight average molecular weight with larger amounts typically producing lower molecular weight copolymeric materials. The amount of free radical initiator is usually at least 0.001 weight percent, at least 0.005 weight percent, at least 0.01 weight percent, at least 0.05 weight percent, or at least 0.1 weight percent based on the total weight of polymerizable components. The amount can be up to 5 weight percent, up to 4 weight percent, up to 3 weight percent, up to 2 weight percent, up to 1.5 weight percent, up to 1 weight percent, up to 0.5 weight percent, up to 0.3 weight percent, up to 0.2 weight percent, or up to 0.1 weight percent based on the total weight of polymerizable components.

Suitable thermal initiators include various azo compound such as those commercially available under the trade designation VAZO from Chemours Co. (Wilmington, DE, USA) including VAZO 67, which is 2,2'-azobis(2-methylbutane nitrile), VAZO 64, which is 2,2'-azobis(isobutyronitrile), VAZO 52, which is (2,2'-azobis(2,4-dimethylpentanenitrile), and VAZO 88, which is 1,1'-azobis(cyclohexanecarbonitrile); various peroxides such as benzoyl peroxide, cyclohexane peroxide, lauroyl peroxide, di-tert-amyl peroxide, tert-butyl peroxy benzoate, dicumyl peroxide, and peroxides commercially available from Atofina Chemical, Inc. (Philadelphia, PA, USA) under the trade designation LUPERSOL (e.g., LUPERSOL 101, which is 2,5-bis(tert-butylperoxy)-2,5-dimethylhexane, and LUPERSOL 130, which is 2,5-dimethyl-2,5-di-(tert-butylperoxy)-3-hexyne); various hydroperoxides such as tert-amyl hydroperoxide and tert-butyl hydroperoxide; and mixtures thereof.

In many embodiments, a photoinitiator is used to form the (meth)acrylate copolymer. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ, USA) or under the trade designation ESACURE KB-1 from Sartomer (Exton, PA, USA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxycyclohexyl phenyl ketone (commercially available under the trade designation IRGACURE 184), bis(2,4,6-trimethylbenzoyl)phenyl phosphine oxide (commercially available under the trade designation IRGACURE 819), 1-[4-(2-hydroxyethoxy)phenyl]-2-hydroxy-2-methyl-1-propane-1-one (commercially available under the trade designation IRGACURE 2959), 2-benzyl-2-dimethylamino-1-(4-morpholinophenyl)butanone (commercially available under the trade designation IRGACURE 369), 2-methyl-1-[4-(methylthio)phenyl]-2-morpholinopropan-1-one (commercially available under the trade designation IRGACURE 907), and 2-hydroxy-2-methyl-1-phenyl propan-1-one (commercially available under the trade designation DAROCUR 1173 from Ciba Specialty Chemicals Corp. (Tarrytown, NY, USA)).

Chain-transfer agents are often included in the polymerizable composition to control the molecular weight of the (meth)acrylate copolymer. Suitable chain-transfer agents include, but are not limited to, those selected from the group of carbon tetrabromide, hexabromoethane, bromotrichloromethane, 2-mercaptoethatiol, tert-dodecylmercaptan, isooctylthioglycoate, 3-mercapto-1,2-propanediol, cumene, pentaerythritol tetrakis(3-mercapto butyrate) (available under the trade name KARENZ MT PE1 from Showa Denko), ethylene glycol bisthioglycolate, and mixtures thereof. Depending on the reactivity of the chain-transfer agent selected, the amount of chain transfer agent is often in a range of 0 to 5 weight percent based on the total weight of monomers in the polymerizable composition. In some embodiments, the amount of the chain transfer agent is at least 0.05 weight percent, at least 0.1 weight percent, at least 0.2 weight percent, at least 0.3 weight percent, or at least 0.5 weight percent and can be up to 5 weight percent, up to 4.5 weight percent, up to 4 weight percent, up to 3.5 weight percent, up to 3 weight percent, up to 2.5 weight percent, up to 2 weight percent, up to 1.5 weight percent, or up to 1 weight percent. The weight percent values are based on the total weight of the polymerizable components used to form the (meth)acrylate copolymer.

The reaction of the polymerizable composition to form the (meth)acrylate copolymer can occur in the presence or absence of an organic solvent. If an organic solvent is included in the polymerizable composition, the amount is often selected to provide the desired viscosity. Examples of suitable organic solvents include, but are not limited to, methanol, tetrahydrofuran, ethanol, isopropanol, pentane, hexane, heptane, acetone, methyl ethyl ketone, methyl acetate, ethyl acetate, toluene, xylene, and ethylene glycol alkyl ether. Those organic solvents can be used alone or as mixtures thereof.

In some embodiments, the polymerization occurs in the presence of at least 10 weight percent organic solvent based on a total weight of the polymerizable composition. The amount can be, for example, at least 20 weight percent, at least 30 weight percent, at least 40 weight percent and up to 70 weight percent, up to 60 weight percent, up to 50 weight percent. In other embodiments, the polymerization occurs with little or no organic solvent present. That is the polymerizable composition is free of organic solvent or contains a minimum amount of organic solvent. If used, the organic solvent is often present in amounts less than 10 weight percent, less than 5 weight percent, less than 4 weight percent, less than 3 weight percent, less than 2 weight percent, or less than 1 weight percent based on the total weight of the polymerizable composition.

The (meth)acrylate copolymer can be formed from the polymerizable composition using any suitable method. The polymerization can occur in a single step or in multiple steps. That is, all or a portion of the monomers and/or free radical initiator may be charged into a suitable reaction vessel and polymerized. For example, a polymerizable composition containing an organic solvent and a thermal initiator can be mixed and heated at an elevated temperature such as in a range of 50°C to 100°C for several hours.

In one possible method of making the (meth)acrylate copolymer, little or no organic solvent is included in the polymerization composition. Such a free radical polymerization method can be conducted in a continuous manner as described, for example, in U.S. Patent Nos. 4,619,979 (Kotnour et al.) and 4,843,134 (Kotnour et al.). In an alternative method of making the (meth)acrylate copolymer, an adiabatic process can be used as described, for example, in U.S. Patent Nos. 5,986,011 (Ellis et al.) and 5,637,646 (Ellis). In a yet other method of making the (meth)acrylate copolymer, the polymerization reaction can occur within a polymeric package as described in U.S. Patent No. 5,804,610 (Hamer et al.).

The resulting (meth)acrylate copolymer may be un-crosslinked or crosslinked depending on the composition of the polymerizable composition. In many embodiments, the (meth)acrylate copolymer is crosslinked.

### Adhesive compositions

An adhesive composition is provided that includes the (meth)acrylate copolymer. The adhesive composition is a pressure-sensitive adhesive. The (meth)acrylate copolymer itself may have adhesive properties suitable for performing as a pressure-sensitive adhesive. Alternatively, optional additives such as a tackifier may be combined with the (meth)acrylate copolymer to provide a composition with suitable adhesive properties. Useful tackifiers include, for example, rosin ester resins and terpene phenol resins. Tackifiers are often mixed in an amount that is less than or equal to the amount of the (meth)acrylate-based polymeric material included in the core. The amount of the optional tackifier is often in a range of 0 to 25 weight percent, 0 to 20 weight percent, 0 to 15 weight percent, 0 to 10 weight percent, or 0 to 5 weight percent based on the total weight of the polymerizable composition.

Optional antioxidants and/or stabilizers such as hydroquinone monoethyl ether (p-methoxyphenol, MeHQ) and that available under the trade designation IRGANOX 1010 (pentaerythritol tetrakis(3-(3,5-di-tert-butyl-4-hydroxyphenyl)propionate)) from BASF Corp. (Florham Park, NJ, USA) can be added to increase the temperature stability of the polymeric material. If used, the antioxidant and/or stabilizer is typically added in a range of 0.01 weight percent to 1.0 weight percent based on a total weight of the polymerizable components used to form the (meth)acrylate copolymer.

Various other optional components can be added to the polymerizable composition such as, for example, adhesion promoters (e.g., (3-glycidyloxypropyl)trimethoxysilane or (3-glycidyloxypropyl)triethoxysilane), colorants (e.g., titania or carbon black), dyes, corrosion inhibiters (e.g., benzotriazole), antistatic agents, plasticizers, thickeners, thixotropic agents, processing aides, nanoparticles, fibers, and combinations thereof. Generally, the amounts of each additive would depend on the use of the adhesive composition.

In some embodiments, the adhesive composition may have a density of at least 0.6 grams per cubic centimeter (g/cm³), at least 0.8 g/cm³, or at least 1.0 g/cm³. The adhesive composition is typically not a foam.

In some embodiments, the adhesive composition (which may be just the crosslinked polymer) exhibits desirable adhesion properties. For example, in some embodiments, the adhesive composition exhibits a 180-degree peel adhesion at 23°C and 12.6 inches per minute (32 centimeters/minute (cm/min)) of at least 0.3 N/mm on polyethylene terephthalate, at least 0.3 N/mm on glass, at least 0.3 N/mm on polycarbonate, and at least 0.5 N/mm on stainless steel with an adhesive thickness of 35 micrometers. The 180-degree peel adhesion can generally be considered a measure of the ability of the adhesive composition to resist debonding from a substrate through adhesive/interfacial or cohesive/internal failure modes. The 180-degree peel is determined in accordance with the methods described in the Examples (Test Method 3).

In some embodiments, the adhesive composition (which may be just the (meth)acrylate copolymer that is optionally crosslinked) exhibits: a shear storage modulus (G') at a frequency of 1 Hz that is often no greater than 50 kPa, no greater than 40 kPa, no greater than 30 kPa, or no greater than 20 kPa at a temperature of 23 °C; and a shear storage modulus (G') at a frequency of 1 Hz that is often no greater than 2000 kPa, no greater than 1600 kPa, no greater than 1200 kPa, no greater than 1000 kPa, no greater than 800 kPa, no greater than 600 kPa, no greater than 500 kPa, no greater than 400 kPa, or no greater than 200 kPa at a temperature of -20°C. The shear moduli demonstrate the material's elastic and viscous response to an applied shear stress. These relatively low shear storage modulus values indicate that the pressure-sensitive adhesive is sufficiently soft to bond well with the substrate. If the shear storage modulus is no greater than 2000 kPa at -20°C and no greater than 50 kPa at 23°C, the adhesive can usually undergo enough deformation to be folded. The shear storage moduli are determined in accordance with the methods described in the Examples (Test Method 1).

In some embodiments, the adhesive composition (which may be just the (meth)acrylate copolymer that is optionally crosslinked) exhibits: a maximum percent shear strain of at least 300 percent, at least 400 percent, at least 500 percent, or at least 600 percent with an applied shear stress of 40 kPa; and a strain recovery of at least 60% within 1 minute after removing the applied shear stress of 40 kPa. The shear strain and strain recovery demonstrate the compliance and recovery of the composition, which is important for flexible and/or foldable articles. The shear strain and recovery are determined in accordance with the methods described in the Examples (Test Method 2).

In some embodiments, the adhesive composition (which may be just the (meth)acrylate copolymer that is optionally crosslinked) exhibits an impact resistance of at least 250 mJ for total energy absorbed and greater than 3 MPa for peak force using a 35 µm-thick adhesive. The total energy absorbed is often at least 275 mJ, at least 300 mJ, at last 325 mJ, at least 350 mJ, at last 375 mJ, or at least 400 mJ. This is generally considered a measure of the composition's ability to absorb impact energy under tensile deformation mode at relevant rates and temperatures. Impact resistance is determined in accordance with the methods described in the Examples (Test Method 4).

In some embodiments, the adhesive composition (which may be just the (meth)acrylate copolymer that is optionally crosslinked) has a haze value less than 5 percent, less than 2 percent, or less than 1 percent. This is important for articles in which an optically clear adhesive is desired. The haze values are determined in accordance with the methods described in the Examples (Test Method 5).

For using in a foldable or flexible article, it can be desirable that the adhesive composition has a combination of good adhesive properties, good impact resistance, and good foldability. That is, the adhesive composition usually exhibits the following characteristics: (1) 180-degree peel adhesion at 23°C at 12.6 inches per minute (32 centimeters/minute (cm/min)) of at least 0.5 N/mm on stainless steel (alternatively or additionally, at least 0.3 N/mm on polyethylene terephthalate and/or at least 0.3 N/mm on glass and/or at least 0.3 N/mm on polycarbonate) with an adhesive thickness of 35 micrometers and (2) shear storage modulus no greater than 2000 kPa at -20°C and no greater than 50 kPa, at 23°C. The impact resistance is often at least 250 mJ for total energy absorbed and greater than 3 MPa for peak force using a 35 µm-thick adhesive.

### Articles

Articles are provided that include the adhesive composition and a substrate. Any suitable substrate can be used. In many embodiments, a layer of the adhesive composition is positioned adjacent to the substrate. The adhesive composition may directly contact the substrate or may be separated from the substrate by one of more layers such as a primer layer.

Any suitable substrate can be used. In some articles, the substrate is flexible. Examples of flexible substrate materials include, but are not limited to, polymeric films, woven or nonwoven fabrics; metal foils, foams (e.g., polyacrylic, polyethylene, polyurethane), and combinations thereof (e.g., metalized polymeric film). Polymeric films include, for example, polypropylene (e.g., biaxially oriented), polyethylene (e.g., high density or low density), polyvinyl chloride, polyurethane (e.g., thermoplastic polyurethanes), polyester (e.g., polyethylene terephthalate (PET), polyethylene naphthalate (PEN), and polylactic acid copolymer), polycarbonate, polyacrylate, polymethyl(meth)acrylate (PMMA), polyvinylbutyral, polyimide, polyamide, fluoropolymer, cellulose acetate, triacetyl cellulose (TAC), ethyl cellulose, and polycyclic olefin polymers (COP). The woven or nonwoven fabric may include fibers or filaments of synthetic or natural materials, such as cellulose, cotton, nylon, rayon, glass, ceramic materials, and the like.

In some embodiments, the article is or contains an adhesive tape. Examples of such adhesive tapes include transfer tapes, one-sided adhesive tapes, two-sided tapes (i.e., a core substrate with an adhesive layer on each side of the substrate, or die-cut adhesive articles (e.g. the article has an adhesive layer positioned adjacent to one release liner or positioned between two release liners). Such adhesive tapes may include a wide variety of substrates for use as a backing or release liner. Examples include woven and nonwoven materials, plastic films, metal foils, and the like.

Adhesive tapes are often prepared by coating an adhesive composition upon a variety of flexible or inflexible backing materials and/or release liners using conventional coating techniques to produce a one-sided tape or a two-sided tape. In the case of a one-sided adhesive tape, the adhesive composition can be coated on a layer of backing material and the side of the backing material opposite that where the adhesive is disposed can be coated with a suitable release material (e.g., a release layer or release liner). Release materials are known and include materials such as, for example, silicone, polyethylene, polycarbamate, polyacrylics, and the like. For two-sided adhesive tape, a first adhesive composition is coated on a layer of backing material and a second layer of adhesive composition is disposed on the opposing surface of the backing material. The second layer may include the adhesive compositions as described herein or a different adhesive composition. For a die-cut adhesive article or for a transfer tape, the adhesive composition is typically positioned between two release liners.

The adhesive articles can be part of another article. For example, the adhesive composition can bind two parts of an article together. In some such articles, the adhesive is positioned adjacent to a substrate that is flexible and/or foldable and is used within another article that is flexible and/or foldable such as within an electronic device that is flexible and/or foldable.

In some embodiments, the article containing the adhesive composition is part of an electronic device. In such devices, the adhesive composition typically forms a layer between two substrates for binding of the two substrates together. Examples of suitable substrates include materials such as polyacrylate, polymethyl methacrylate, polycarbonate, polyamide, polyimide, polyethylene terephthalate (PET), polyethylene naphthalate (PEN), polycyclic olefin polymers (COP), thermoplastic polyurethane, triacetyl cellulose (TAC), and metal foil.

A common application of adhesives in the electronics industry is in the manufacturing of various displays, such as computer monitors, TVs, cell phones, small displays (in cars, appliances, wearables, electronic equipment, etc.). Flexible electronic displays, where the display can be bent freely without cracking or breaking, is a rapidly emerging technology area for making electronic devices using, for example, flexible plastic substrates. This technology allows integration of electronic functionality into non-planar objects, conformity to desired design, and flexibility during use that can give rise to a multitude of new applications. Thus, in some embodiments, the electronic device includes a flexible display.

With the emergence of flexible electronic displays, there is an increasing demand for adhesives, and particularly for optically clear adhesives (OCA), to serve as an assembly layer or gap filling layer between an outer cover lens or sheet (based on glass, polyethylene terephthalate (PET), polycarbonate (PC), polymethyl methacrylate (PMMA), polyimide, polyethylene naphthalate (PEN), cyclic olefin copolymer, etc.) and an underlying display module of electronic display assemblies. The presence of the OCA improves the performance of the display by increasing brightness and contrast, while also providing structural support to the assembly. In a flexible assembly, the OCA will also serve as the assembly layer, which in addition to the typical OCA functions, may also absorb most of the folding induced stress to prevent damage to the fragile components of the display panel and protect the electronic components from breaking under the stress of folding. The OCA layer may also be used to position and retain the neutral bending axis at or at least near the fragile components of the display, such as for example the barrier layers, the driving electrodes, or the thin film transistors of an organic light emitting display (OLED). The adhesive compositions described herein can be prepared to be an OCA.

In some embodiments, the electronic device includes a photovoltaic device. Photovoltaic devices are rapidly advancing in performance and device construction. The ability to roll or fold portable arrays is an attractive design for off grid uses such as remote area travel or living, camping, and mobile applications. As the photovoltaic (PV) components become more efficient, the number of modules needed to produce enough power decreases, reducing both size and weight. Integrating organic PV cells or inorganic PV cells onto or into a flexible format offer advantageous designs.

Other flexible articles that can include the adhesive composition described herein include, for example, rollable keyboards, electronic games, sensors, light-emitting elements, and articles of clothing.

The article is often formed by positioning an adhesive layer adjacent to a substrate. The adhesive composition can be coated on a substrate (e.g., a backing or a release liner) using conventional coating techniques. For example, the adhesive compositions can be applied by methods such as roller coating, flow coating, dip coating, spin coating, spray coating, knife coating, and die coating. The adhesive composition that is coated may have any desirable weight percent solids but is often in a range of 10 to 100 weight percent solids based on the total weight of the adhesive composition. The desired solids content may be achieved by further dilution of the coating composition, or by partial drying.

The adhesive composition positioned on a substrate as a layer or positioned between two release liners as a layer often has a thickness up to 100 micrometers (i.e., microns or µm), up to 50 micrometers, up to 35 micrometers, or up to 25 micrometers. In some embodiments, the adhesive composition may have an overall (average) thickness of the adhesive composition disposed on a substrate in a layer (e.g., in the form of a coating placed between liners) of up to 400 micrometers, up to 300 micrometers, or up to 200 micrometers. The thickness that is desirable is dependent on the specific use of the adhesive layer. Thinner layers may be desirable for applications where the adhesive composition will be folded while thicker layers may be desirable for applications wherein the adhesive composition will be folded.

### EXAMPLES

Objects and advantages of this disclosure are further illustrated by the following examples, but the materials and amounts thereof recited in these examples, as well as other conditions and details, should not be construed to unduly limit this disclosure.

Unless otherwise noted, all parts, percentages, ratios, etc. in the examples and the rest of the specification are by weight, and all reagents used in the examples were obtained, or are available, from general chemical suppliers such as, for example, Sigma-Aldrich, St. Louis, MO, or may be synthesized by conventional methods.

The following abbreviations are used in this section: mL = milliliter, min = minutes, h = hours, sec = second, g = gram, mg = milligram, Kg = kilogram, J = Joule, mJ = milliJoule, mmol = millimole, m = meter, centimeter = cm, mm = millimeter, µm = micrometer or micron, ms⁻¹ = meters/second, °C = degrees Celsius, cP = centipoise, mmHg = millimeters mercury, kPa = kiloPascal, lb = pound, N = Newton, oz = ounce, rpm = revolutions per minute, mW/cm² = milliWatts per square centimeter, mJ/cm² = milliJoules per square centimeter, Hz = Hertz, Da = Daltons, and phr = parts per hundred of resin (i.e., total polymer mass).

**Table 1: Materials**

| **Abbreviation** | **Description** | **Supplier** |
|---|---|---|
| EHA | 2-Ethylhexyl acrylate monomer | BASF, Ludwigshafen, Germanv |
| AA | Acrylic Acid monomer | BASF |
| NVP | *N*-vinyl 2-pyrollidinone monomer | TCI, Tokyo, Japan |
| DMA | *N,N*-dimethyl acrylamide monomer | TCI |
| HEA | 2-Hydroxy-ethyl acrylate monomer | TCI |
| ACM | Acrylamide monomer | TCI |
| PEG-A 480 Da | Poly(ethylene glycol) methyl ether acrylate (reported Mn = 480 Da) | Sigma-Aldrich, St. Louis, MO |
| PEG-A 5000 Da | Poly(ethylene glycol) methyl ether acrylate (reported Mn = 5000 Da) | Sigma-Aldrich, St. Louis, MO |
| PPG-A 475 Da | Polypropylene glycol) acrylate (reported Mn = 475 Da) | Sigma-Aldrich, St. Louis, MO |
| BisA | 1,1'-Isophthaloyl-bis(2-methylaziridine) crosslinker, CAS No. 7652-64-4, U.S. Pat. No. 6,893,718 | 3M, St. Paul, MN |
| SR344 | Poly(ethylene glycol) diacrylate (400 Da) crosslinking agent | Arkema, Colombes, France |
| V67 | VAZO-67 thermal free radical initiator | Sigma-Aldrich |
| TDDM | Tertiary-dodecyl mercaptan chain transfer agent | Sigma-Aldrich |
| I651 | IRGACURE 651 photoinitiator | BASF |

### Test Methods

### Test Method 1: Dynamic Mechanical Analysis (DMA) Testing

Transfer tapes for DMA testing were laminated together to form a stack of 1 mm total thickness by removing the RF02N release liner and folding the tacky side onto itself repeatedly (using a 15-cm rubberized hand roller, Polymag Tek, NY) to ensure no air bubbles were trapped within the adhesive. Dynamic mechanical analysis was used to probe the shear storage (G') and loss (G") moduli as a function of temperature and/or frequency, and to determine the glass transition temperature (T_{g}) of the material. An 8-mm diameter by 1-mm thick disk of the adhesive without liners was placed between the 8-mm probes of a DHR-3 parallel plate shear rheometer (TA Instruments, New Castle, DE). A temperature scan was performed by ramping from -30°C to 160°C at 3°C/min at 1 Hz and at a strain of ≤ 5%. The shear storage modulus was recorded at select temperatures of -20°C and 23°C. The T_{g} of the material was determined as the peak in the tan δ vs. temperature profile (i.e., max tan(δ)).

### Test Method 2: Creep Compliance by Dynamic Mechanical Analysis (DMA) Testing

The adhesives were further evaluated for creep compliance using the DHR-3 rheometer with a Peltier stage fitted with an 8-mm parallel plate geometry. The sample temperature was maintained at 25°C while a stress of 40 kPa was applied to the sample for a period of 5 sec at which time the applied stress was returned to 0 kPa. The maximum strain during the time-period of applied stress was recorded for each sample to provide a measure of extensibility of the adhesive (max% strain in Table 6). The % strain recovered at 10 sec and 60 sec after the stress was reduced to 0 kPa was recorded to indicate the high strain recoverability of the adhesive upon application of stress.

### Test Method 3: 180 Degree Peel Adhesion Testing

Peel adhesion was measured for PSA transfer tapes (Adhesive Transfer Tape, ATT) at an angle of 180°. For peel adhesion testing to rigid substrates such as annealed 18-gauge, 304 stainless steel (SS), polycarbonate (PC) (both from Chem. Instruments, Fairfield, OH), and glass (made from float Glass using the air side, from 3M Glass Laboratory), the ATTs were laminated directly to the 2-inch × 6-inch (5.08 cm × 15.24 cm) substrate. For peel adhesion to flexible substrates, such as PET (5-mil thick, biaxially oriented, with no surface treatments, from Mitsubishi Polyester Film, Greer, SC), and PI (2 mil (50 µm) thick KAPTON film with no surface treatments from Dupont, Midland MI), the substrate was first adhered to 2-inch × 6-inch (5.08 cm × 15.24 cm) glass using double sided adhesive transfer tape. This method followed ASTM D3330, test method E, liner side, and TM-613 (180° peel adhesion to stainless steel or backing) procedure F. PSA ATTs were laminated to the plasma-treated side of 2 mil (50 µm) biaxially oriented polyethylene terephthalate (PET) film (3M, treatment conditions are described in U.S. Pat. No. 10,134,566) for use as a backing material. All samples and substrates were conditioned in a controlled temperature and humidity (CTH) room (70°F (21°C), 50% RH) for a period of no less than 24 h prior to testing. Test panels were cleaned with Methyl Ethyl Ketone (MEK) solvent before and after testing. A rubberized 4.5-lb (2.04 Kg) roller was used to laminate the PET tapes to the panels (4 × 3 sec roll downs). Peel testing was done using an Instron Universal Testing Instrument in a CTH room equipped with an environmental chamber. Peel tests were conducted at a rate of 12 inches/min (0.3 m/min) cross-head speed at a temperature of 23°C. Each sample was peeled at least three times from the same SS substrate and averages of all three measurements are reported.

### Test Method 4: Tensile Impact Testing

The tensile impact test is a destructive test to measure an adhesive material's tensile impact resistance in a dynamic event (e.g., drop). The PSA ATTs between liners were cut to a predetermined geometry (see Table 2) and laminated between two unused and cleaned (MEK) stainless steel coupons of a specified geometry (see Table 2). The coupon-ATT stacks were dwelled for a specified time prior to being tested (e.g., 48 hours at CTH conditions), and multiple replicates were made (greater than 5) and tested. The coupon-adhesive stacks were tested using an Instron CEAST 9340 drop tower (0.3-450 J energy delivery) with a drop height of 115 mm, and a drop weight of 3 Kg. The total energy absorbed, and the peak force are reported for each adhesive tested in this configuration.

The test method for tensile impact strength of adhesive bonds was a modified version of the ISO 9653: 1998 shear impact test method. Impact was tested by adhering two surfaces together and subjecting the bond to an impact, but in a tensile mode, utilizing the substrate geometry and assembly procedure outlined in Table 2 and Test Method 4. All the substrates and instrumentation are commercially available.

**Table 2: Tensile Impact Test Parameters**

| **Materials** | Coupon Substrate | 304 stainless steel, mirror finish |
|---|---|---|
| | Housing Substrate | 304 stainless steel, mirror finish |
| **Tape Geometry** | Die-cut | Circle: 31.1 mm OD/26.1 mm ID (2.0 mm width) |
| | | Outside Radius 4.0 mm |
| | | Inside Radius 2.0 mm |
| **Assembly Procedure** | Force | 42 N |
| | Time | 60 sec |
| **Test Conditions (Modified ISO 9653:1998 test method)** | Bonding area | 225 mm² |
| | Dwell time | 48 h at 23°C |
| | Drop height | 115 mm |
| | Total drop mass | 2.986 Kg |
| | Impact velocity | 1.50 ms⁻¹ |
| | Impact energy | 3.37 J |
| | Temperature | 23 ± 1°C |
| | Relative Humidity | 50 ± 5% |

### Test Method 5: Optical Durability Testing

Transmission/haze/clarity (THC) measurements were performed using a BYK-Chemie (Wesel, Germany) Hazegard i. The ATT was cut to approximately 5 cm width by 10 cm length. The RF02N liner was removed, and the adhesive with the second liner was laminated to an optically clear piece of 1 mm thick glass (Eagle Glass, Corning Glass, Corning, NY). The second liner was then removed and a 2 mil (50 µm) thick layer of optically clear polyethylene terephthalate (PET, Skyrol SH-81 from SKC Haas, Seoul, Korea) was laminated onto the assembly. The sample was placed in the Hazegard to measure THC through the PET/PSA/glass assembly. Samples were then aged in an oven chamber set to 65°C and 90% relative humidity for at least 500 hours. After samples were removed from the heat/humidity chamber and allowed to equilibrate in conditions of 50 percent relative humidity (RH) and 23°C for at least 1 hour, haze measurements were re-measured. Typically, samples acceptable for optically clear applications will retain haze values of less than about 2 percent, or more ideally less than 1 percent following these aging conditions.

### Test Method 6: Number Average Molecular Weight Determination

Reverse-phase HPLC may be used to determine the number average molecular weight (Mn) of a macromer. This technique offers superior resolution of oligomers than traditional GPC. Traditional polymer distribution calculations may be applied to determine the number average molecular weight, weight average molecular weight, and polydispersity.

Separations may be performed on an Agilent 1290 UHPLC/MS consisting of quaternary gradient pump, autosampler, heated column compartment, diode array with 10 mm pathlength cell, and a model 6130 mass selective detector (MSD). Separations may be performed using a 100 × 2 mm Waters Acquity CSH 1.7 µm C18 column equilibrated with 75/25 v/v (volume/volume) of water (H₂O)/acetonitrile (ACN) at 0.50 mL/min and 50°C. Following injection of 0.50 microliter (µL) of a macromer sample dissolved at an appropriate concentration in a suitable solvent, sample components may be separated using a 10.0 min linear gradient to 60/40 H₂O/ACN, followed by a 2.0 min linear gradient to neat ACN held isocratically for 1.0 min before re-equilibration in the starting eluent. Species may be detected by UV absorbance (200±1 nm referenced to the 400±50 nm signal). Electrospray Ionization (ESI) mass spectrometric detection may be performed using nebulization with 11 L/min N₂ at 325°C and 45 pounds per square inch (psi). Positive ion spectra are scanned from m/z 75 - 1350 using a 100 V fragmenter potential.

### Examples E1-E14 and Comparative Examples CE5-CE11: Preparation of Adhesive Tapes

Each reaction mixture was prepared in 16 ounce (120 mL) amber glass bottles. The monomers were combined in the appropriate wt-% ratios (shown in Table 3 below) to target the desired final copolymer composition, with a total wt-% of 100% by mass. V67 (0.1-0.2 phr, where the resin total is the total mass of 100 wt-% of the monomers) and TDDM (0.1-0.2 phr, where the resin total is the total mass of 100 wt-% of the monomers) were added. Samples were made up as monomer solutions according to Tables 3 and 4. Nitrogen gas was bubbled through the reaction mixtures for 7 min. The bottles were sealed and placed within a heated water bath at 67°C with mild agitation. The bottles were removed after 20 hours of continuous mixing and heating and were quenched with cold water. The solutions were diluted to 30% solids with the solvent used during polymerization, and 0.10-0.20 phr (with respect to the total mass of 100 wt-% of the monomers) of BisA crosslinking agent (1,1'-isophthaloyl-bis(2-methylaziridine) crosslinker, CAS No. 7652-64-4) was mixed into the solution using high shear mixing equipment (1660 rpm) less than 1 hour before coating. Homogenously mixed solutions were coated onto a RF22N PET release liner (SKC Haas, Seoul, Korea, 2 mil (50 µm)) using a notch bar coater set to a total gap between the RF22N liner and the notch bar of 175 µm (to achieve a nominal dried adhesive thickness of 35 µm). The coated PSA films were dried in an oven at 80°C for 15 minutes. Once removed and cooled to room temperature, the tacky adhesive transfer tapes (ATT) were covered with a secondary PET release liner with a lower and differential release force to that of the first (RF02N, SKC Haas, Korea, 2 mil, (50 µm)) for protection. For adhesive performance testing, the RF02N liner was removed and the exposed side of the tacky adhesive tape was rolled by hand lamination (using a 6-inch (15-cm) rubberized hand roller, Polymag Tek, Rochester, NY) onto a 6-inch (15-cm) wide primed polyester film (3M, 2-mil (50-µm) biaxially oriented PET film with plasma treatment conditions described in U.S. Pat. No. 10,134,566 (David et al.)) ensuring no air bubbles were trapped between the adhesive and the primed polyester film.

### Examples E15-E21 and Comparative Examples CE1-CE4 and CE12-CE15: Preparation of Adhesive Tapes

The monomers were combined in the appropriate wt-% ratios (shown in Table 3 below) to target the desired final copolymer composition, with a total wt-% of 100% by mass. The initial monomer mixtures for Examples E18-E21 and Comparative Examples CE12-CE15 were formulated without the macromer; the macromer was added after the first reaction step at the phr level shown in Table 3 and 4. In Tables 3 and 4, the plus sign with E18 to E21 and CE12 to CE15 indicates that the macromer was added as parts per hundred resin (phr).

To this mixture was added I651 at 0.025 phr (with respect to the total mass of 100 wt-% of the monomers). The monomer mixture was degassed with nitrogen for 10 min, and then exposed to low intensity (0.3 mW/cm²) UVA radiation from a 360-nm LED light while stirring until a viscosity of approximately 1000-2000 cP was obtained. Additional I651 (0.2 phr, with respect to the total mass of 100 wt-% of the monomers) and SR344 (0.10 phr, with respect to the total mass of 100 wt-% of the monomers) was added, and the solution was well mixed. The solution was then coated between PET release liners (RF22N and RF02N, SKC Haas, Seoul, Korea, 2 mil (Examples E15-E17 and Comparative Examples CE1-CE10, 50 µm)) (Examples E18-E23, 200µm and Comparative Examples CE13-CE14, 180µm) and cured with 1,600 mJ/cm² of UVA radiation to produce a tacky adhesive film. For adhesive performance testing, the RF02N liner was removed, and the exposed side of the tacky adhesive tape was rolled by hand lamination (using a 6-inch (15-cm) rubberized hand roller, Polymag Tek, NY) onto a 6-inch (15-cm) wide primed polyester film (3M, 2-mil (50-µm) biaxially oriented PET film with plasma treatment conditions described in U.S. Pat. No. 10,134,566) ensuring no air bubbles were trapped between the adhesive and the primed polyester film.

**Table 3: Compositions of Examples and Comparative Examples**

| **Example** | **PEG-A MW Da** | **Copolymer Composition (wt-%)** | | | | | | | | **Crosslinker** | |
|---|---|---|---|---|---|---|---|---|---|---|---|
| | | **PEG-A** | **EHA** | **PPG-A 475 Da** | **HEA** | **AA** | **NVP** | **DMA** | **ACM** | **Type** | **phr** |
| E1 | 480 | 5 | 90 | | | 5 | | | | BisA | 0.10 |
| E2 | 480 | 10 | 85 | | | 5 | | | | BisA | 0.10 |
| E3 | 480 | 15 | 80 | | | 5 | | | | BisA | 0.10 |
| E4 | 480 | 10 | 80 | | | 5 | 5 | | | BisA | 0.10 |
| E5 | 480 | 13 | 80 | | | 5 | 2 | | | BisA | 0.10 |
| E6 | 480 | 8 | 85 | | | 7 | | | | BisA | 0.10 |
| E7 | | | 90 | 5 | | 5 | | | | BisA | 0.10 |
| E8 | 480 | 10 | 83 | | | 2 | 5 | | | BisA | 0.10 |
| E9 | 480 | 10 | 80 | | | 2 | 8 | | | BisA | 0.10 |
| E10 | 480 | 10 | 83 | | | 2 | 5 | | | BisA | 0.20 |
| E11 | 480 | 10 | 84.5 | | | 0.5 | 5 | | | BisA | 0.10 |
| E12 | 480 | 10 | 84.5 | | | 0.5 | | | 5 | BisA | 0.10 |
| E13 | 480 | 10 | 83 | | | 2 | | | 5 | BisA | 0.10 |
| E14 | 480 | 20 | 70 | | | 10 | | | | BisA | 0.10 |
| E15 | 480 | 10 | 75 | | | 1 | | 14 | | SR344 | 0.10 |
| E16 | 480 | 20 | 65 | | | 1 | | 14 | | SR344 | 0.10 |
| E17 | 480 | 20 | 55 | | 15 | 1 | | 9 | | SR344 | 0.10 |
| E18+ | 400 | 10 | 88 | | | 10 | | 2 | | SR344 | 0.10 |
| E19+ | 480 | 10 | 88 | | | 10 | | 2 | | SR344 | 0.10 |
| E20+ | 550 | 10 | 88 | | | 10 | | 2 | | SR344 | 0.10 |
| E21+ | 750 | 10 | 88 | | | 10 | | 2 | | SR344 | 0.10 |
| CE1 | | | 80 | | 10 | | 8 | | 2 | SR344 | 0.10 |
| CE2 | 480 | 10 | 80 | | | | 8 | | 2 | SR344 | 0.10 |
| CE3 | 480 | 20 | 80 | | | | | | | SR344 | 0.10 |
| CE4 | 480 | 20 | 70 | | 10 | | | | | SR344 | 0.10 |
| CE5 | | | 93 | | | 5 | 2 | | | BisA | 0.15 |
| CE6 | 480 | 20 | 60 | | | 20 | | | | BisA | 0.10 |
| CE7 | | | 90 | | | 10 | | | | BisA | 0.10 |
| CE8 | | | 80 | | | 20 | | | | BisA | 0.10 |
| CE9 | 480 | 20 | 60 | | | 10 | 10 | | | BisA | 0.10 |
| CE10 | 480 | 20 | 65 | | | 10 | 5 | | | BisA | 0.10 |
| CE11 | 480 | 10 | 80 | | | 10 | | | | BisA | 0.10 |
| CE12+ | 324 | 10 | 88 | | | 10 | | 2 | | SR344 | 0.10 |
| CE13+ | 2000 | 10 | 88 | | | 10 | | 2 | | SR344 | 0.10 |
| CE14+ | 5000 | 10 | 88 | | | 10 | | 2 | | SR344 | 0.10 |
| CE15+ | 1000 | 10 | 88 | | | 10 | | 2 | | SR344 | 0.10 |

**Table 4: Percent Solids and Solvents in Compositions of Examples and Comparative Examples**

| **Example** | **% Solids** | **Solvent** |
|---|---|---|
| E1 | 50 | Toluene |
| E2 | | |
| E3 | | |
| E4 | | |
| E5 | | |
| E6 | | |
| E7 | 45 | Ethyl Acetate |
| E8 | | |
| E9 | | |
| E10 | | |
| E11 | | |
| E12 | | |
| E13 | | |
| E14 | | |
| E15 | 100 | N/A |
| E16 | | |
| E17 | | |
| E18+ | | |
| E19+ | | |
| E20+ | | |
| E21+ | | |
| CE1 | | |
| CE2 | | |
| CE3 | | |
| CE4 | | |
| CE5 | 45 | Ethyl Acetate |
| CE6 | | |
| CE7 | | |
| CE8 | | |
| CE9 | | |
| CE10 | | |
| CE11 | 50 | Toluene |
| CE12+ | 100 | N/A |
| CE13+ | | |
| CE14+ | | |
| CE15+ | | |

**Table 5: Test Results from Test Method 1**

| **Example** | **Max tan(δ) (°C)** | **G' at 23°C (kPa)** | **G' at -20°C (kPa)** |
|---|---|---|---|
| E1 | -29 | 23 | 267 |
| E2 | -30 | 19 | 189 |
| E3 | <-30 | 17 | 173 |
| E4 | -16 | 36 | 138 |
| E5 | -23 | 20 | 432 |
| E6 | -21 | 21 | 576 |
| E7 | -24 | 35 | 574 |
| E8 | -30 | 26 | 212 |
| E9 | -27 | 30 | 310 |
| E10 | -30 | 34 | 240 |
| E11 | <-30 | 21 | 121 |
| E12 | -19 | 40 | 637 |
| E13 | -19 | 38 | 638 |
| E14 | -24 | 32 | 715 |
| E15 | -34 | 33 | 219 |
| E16 | -38 | 31 | 174 |
| E17 | -28 | 45 | 395 |
| E18 (400 Da) | N/A | N/A | N/A |
| E19 (480 Da) | -18.6 | 60 | 1415 |
| E20 (550 Da) | N/A | N/A | N/A |
| E21 (750 Da) | -17 | 65 | 1746 |
| CE1 | -31 | 43 | 400 |
| CE2 | -31 | 42 | 396 |
| CE3 | -45 | 13 | 44 |
| CE4 | -50 | 21 | 63 |
| CE5 | -15 | 59 | 1190 |
| CE6 | -3 | 128 | 59600 |
| CE7 | -1 | 99 | 7942 |
| CE8 | +31 | 2184 | 17500 |
| CE9 | +2 | 101 | 24300 |
| CE10 | -10 | 49 | 4244 |
| CE11 | -11 | 40 | 2634 |
| CE12 (324 Da) | -12 | 81 | 3825 |
| CE13 (2000 Da) | -19 | 64 | 1346 |
| CE14 (5000 Da) | -13 | 153 | 4708 |
| CE15 (1000 Da) | -16 | 76 | 2240 |

**Table 6: Test Results from Test Method 2**

| **Example** | **DMA Compliance (40 kPa Stress)** | | |
|---|---|---|---|
| | **Max % Strain** | **% Recovery After 10 sec** | **% Recovery After 60 sec** |
| E1 | 852 | 66 | 82 |
| E2 | 1200 | 58 | 75 |
| E3 | 1103 | 66 | 83 |
| E4 | ND | ND | ND |
| E5 | 1040 | 48 | 66 |
| E6 | 690 | 62 | 87 |
| E7 | 771 | 59 | 78 |
| E8 | 1365 | 63 | 73 |
| E9 | 374 | 84 | 93 |
| E10 | 367 | 91 | 99 |
| E11 | 3303 | 30 | ND |
| E12 | 435 | 78 | 89 |
| E13 | 526 | 78 | 89 |
| E14 | 902 | 61 | 79 |
| E15 | 442 | 79 | 91 |
| E16 | 542 | 84 | 94 |
| E17 | 145 | 95 | 99 |
| E18 (400 Da) | N/A | N/A | N/A |
| E19 (480 Da) | 177 | 87 | 96 |
| E20 (550 Da) | N/A | N/A | N/A |
| E21 (750 Da) | 184 | 87 | 96 |
| CE1 | 357 | 93 | 98 |
| CE2 | 365 | 84 | 95 |
| CE3 | 1308 | 78 | 88 |
| CE4 | 501 | 93 | 96 |
| CE5 | ND | ND | ND |
| CE6 | 143 | 77 | 91 |
| CE7 | 123 | 73 | 89 |
| CE8 | 9 | 60 | 85 |
| CE9 | 121 | 70 | 85 |
| CE10 | 327 | 64 | 80 |
| CE11 | 535 | 54 | 73 |
| CE12 (324 Da) | 116 | 91 | 98 |
| CE13 (2000 Da) | 133 | 92 | 98 |
| CE14 (5000 Da) | 65 | 87 | 95 |
| CE15 (1000 Da) | 191 | 86 | 95 |

**Table 7: Test Results from Test Method 3**

| **Example** | **180° Peel Adhesion at 12"/min from Substrate (N/mm)** | | | | |
|---|---|---|---|---|---|
| | **Stainless Steel** | **PET** | **Polyimide** | **Glass** | **Polycarbonate** |
| | **23°C 3 days** | **23°C 3 days** | **23°C 3 days** | **23°C 3 days** | **23°C 3 days** |
| E1 | 0.7 Gho | 0.5 Adh | | 0.5 Adh | 0.4 Adh |
| E2 | 0.6 Coh | 0.4 Adh | | 0.4 Adh | 0.4 Adh |
| E3 | 0.5 Coh | 0.3 Adh | | 0.4 Adh | 0.3 Adh |
| E4 | 1.0 Coh | 0.9 Coh | | 0.9 Coh | 1.0 Adh |
| E5 | 1.0 Coh | 0.8 Coh | | 0.8 Coh | 0.8 Coh |
| E6 | 1.0 Coh | 1.0 Coh | | 1.0 Coh | 1.0 Coh |
| E7 | 1.3 Coh | 0.7 Adh | | 0.7 Adh | 1.0 Adh |
| E8 | 0.7 Adh | 0.3 Adh | | 0.3 Adh | 0.5 Adh |
| E9 | 0.6 Adh | 0.4 Adh | | | 0.5 Adh |
| E10 | 0.5 Adh | 0.2 Adh | | | 0.3 Adh |
| E11 | 0.5 Coh | 0.8 Coh | | 0.3 Adh | 0.3 Adh |
| E12 | 0.8 Adh | 0.9 Gho | | 0.6 Adh | 0.5 Adh |
| E13 | 0.8 Adh | 1.0 Gho | | 0.6 Adh | 0.4 Adh |
| E14 | 0.8 Coh | | 0.8 Adh | 0.8 Adh | 0.8 Adh |
| E15 | 1.0 Adh | | 0.8 Adh | 0.6 Adh | 0.9 Adh |
| E16 | 0.8 Adh | | 0.5 Adh | 0.4 Adh | 0.6 Adh |
| E17 | 0.5 Adh | | 0.4 Adh | 0.5 Adh | 0.4 Adh |
| E18 (400 Da) | 1.2 Adh* | | | | 1.2 Adh* |
| E19 (480 Da) | 1.0 Adh* | | | | 1.0 Adh* |
| E20 (550 Da) | 1.1 Adh* | | | | 1.1 Adh* |
| E21 (750 Da) | 1.0 Adh* | | | | 0.9 Adh* |
| CE1 | 0.5 Adh | | 0.4 Adh | 0.4 Adh | |
| CE2 | 0.5 Adh | | 0.4 Adh | 0.4 Adh | |
| CE3 | 0.1 Adh | | 0.0 Adh | 0.0 Adh | 0.0 Adh |
| CE4 | 0.3 Adh | | 0.2 Adh | 0.1 Adh | 0.1 Adh |
| CE5 | 0.6 Adh | | | | |
| CE6 | 0.9 Coh | | 0.9 Coh | 1.1 Adh | 0.9 Adh |
| CE7 | 1.1 Adh | | 1.2 Adh | 1.0 Adh | 0.9 Sho |
| CE8 | 0.1 Sho | | | | 0.1 Sho |
| CE9 | 1.3 Adh | | 1.3 Coh | 1.0 Adh | 0.8 Adh |
| CE10 | 1.6 Coh | | 1.6 Coh | 1.8 Coh | 1.5 Coh |
| CE11 | 1.0 Coh | 1.0 Coh | | 1.0 Coh | 0.9 Gho |
| CE12 (324 Da) | 0.8 Adh* | | | | 0.9 Adh* |
| CE13 (2000 Da) | 0.5 Adh* | | | | 0.5 Adh* |
| CE14 (5000 Da) | 1.0 Adh* | | | | 1.1 Adh* |
| CE15 (1000 Da) | 0.9 Adh* | | | | 0.8 Adh* |

| | | | | | |
|---|---|---|---|---|---|
| * 1 day dwell | | | | | |

**Table 8: Test Results from Test Method 4**

| **Example** | | **Tensile Impact to SS Coupons (bond area = 225 mm²), 48 h CTH dwell, 60s of 4 Kg for lamination** | |
|---|---|---|---|
| | **Nominal Coating Thickness (µm)** | **Total Energy Absorbed at 23°C (mJ)** | **Peak Force at 23°C (MPa)** |
| E1 | 35 | 291 ± 17 | 3.4 ± 0.2 |
| E2 | 35 | 314 ± 9 | 3.5 ± 0.1 |
| E3 | 35 | 298 ± 9 | 3.2 ± 0.1 |
| E4 | 35 | ND | ND |
| E5 | 35 | 364 ± 3 | 4.4 ± 0.1 |
| E6 | 35 | 333 ± 16 | N/A |
| E7 | 35 | 411 ± 37 | 6.1 ± 0.4 |
| E8 | 35 | ND | ND |
| E9 | 35 | ND | ND |
| E10 | 35 | 258 ± 25 | 3.8 ± 0.2 |
| E11 | 35 | 337 ± 33 | 6.5 ± 1.0 |
| E12 | 35 | 581 ± 71 | 9.7 ± 1.2 |
| E13 | 35 | 487 ± 64 | 8.1 ± 1.8 |
| E14 | 50 | 519 ± 44 | 11.0 ± 1.4 |
| E15 | 50 | 480 ± 84 | 8.1 ± 0.7 |
| E16 | 50 | 331 ± 67 | 6.9 ± 1.5 |
| E17 | 50 | ND | ND |
| E18 (400 Da) | 200 | 912 ± 95 | 14.0 ± 1.4 |
| E19 (480 Da) | 200 | 1384 ± 53 | 17.3 ± 1.1 |
| E20 (550 Da) | 200 | 1003 ± 74 | 14.6 ± 0.9 |
| E21 (750 Da) | 200 | 1401 ± 83 | 17.6 ± 0.8 |
| CE1 | 50 | ND | ND |
| CE2 | 50 | ND | ND |
| CE3 | 50 | 229 ± 52 | 7.1 ± 0.6 |
| CE4 | 50 | 269 ± 29 | 6.4 ± 0.3 |
| CE5 | 50 | ND | ND |
| CE6 | 50 | 143 ± 17 | 5.6 ± 0.5 |
| CE7 | 50 | 304 ± 153 | 7.3 ± 0.8 |
| CE8 | 50 | 147 ± 65 | 4.7 ± 0.6 |
| CE9 | 50 | 164 ± 21 | 5.5 ± 0.4 |
| CE10 | 50 | 367 ± 44 | 10.3 ±1.8 |
| CE11 | 50 | 145 ± 20 | ND |
| CE12 (324 Da) | 200 | 899 ± 84 | 18.3 ± 0.5 |
| CE13 (2000 Da) | 180 | 457 ± 49 | 10.2 ± 1.1 |
| CE14 (5000 Da) | 180 | 593 ± 71 | 11.8 ± 1.2 |
| CE15 (1000 Da) | 200 | 1077 ± 25 | 18.6 ± 1.0 |

**Table 9: Test Results from Test Method 5**

| **Example** | ***t* = 0 h at 65°C and 90% RH** | | | ***t* = 500 h at 65°C and 90% RH** | | |
|---|---|---|---|---|---|---|
| | **Transmission (%)** | **Haze (%)** | **Clarity (%)** | **Transmission (%)** | **Haze (%)** | **Clarity (%)** |
| E1* | 91.9 | 0.41 | 99.9 | 91.8 | 0.40 | 99.9 |
| E2* | 93.6 | 0.30 | 99.9 | 93.6 | 0.31 | 100 |
| E3* | 93.7 | 0.08 | 100 | 93.6 | 0.22 | 99.9 |
| E8 | 91.5 | 0.81 | 99.6 | 91.6 | 0.76 | 99.6 |
| E9 | 91.5 | 1.00 | 99.4 | 92.4 | 0.62 | 99.6 |
| E10 | 91.5 | 0.77 | 99.6 | 91.6 | 0.78 | 99.6 |
| E11 | 93.8 | 0.11 | 100 | 94.6 | 0.87 | 100 |
| CE6 | 91.0 | 1.90 | 99.5 | 91.6 | 1.67 | 99.8 |
| CE8 | 90.4 | 5.32 | 96.7 | 91.5 | 2.20 | 99.4 |

| | | | | | | |
|---|---|---|---|---|---|---|
| *Aging time, t for these samples at 65°C/90% RH was 135 h. | | | | | | |

## Claims

1. A (meth)acrylate copolymer comprising monomeric units derived from polymerizable components comprising:
a (meth)acrylate macromer comprising 1) a single (meth)acryloyloxy group and 2) a poly(ethylene oxide) group, polypropylene oxide) group, or poly(ethylene oxide-co-propylene oxide) group, the (meth)acylate macromer having a number average molecular weight no greater than 900 Daltons and present in an amount of at least 5 weight percent based on a total weight of the polymerizable components;
an alkyl (meth)acrylate; and
a (meth)acrylate-containing carboxylic acid present in an amount no greater than 15 weight percent based on the total weight of the polymerizable components; and
a crosslinking agent that is a multifunctional (meth)acrylate monomer, a multifunctional aziridine, or a combination thereof in an amount ranging from 0.1 to 5 weight percent based on a total weight of the polymerizable components; and
wherein the (meth)acrylate copolymer has a glass transition temperature no greater than -15°C wherein the glass transition temperature is measured by the method according to the description.

2. The (meth)acrylate copolymer of claim 1, wherein the (meth)acrylate copolymer has a number average molecule weight in a range of 350 to 900 Daltons wherein the number average molecule weight is measured by the method according to the description.

3. The (meth)acrylate copolymer of claim 1 or 2, wherein the (meth)acrylate macromer has a poly(ethylene oxide) group.

4. The (meth)acrylate copolymer of any one of claims 1 to 3, wherein the polymerizable components comprise 5 to 60 weight percent of the (meth)acrylate macromer, 25 to 95 weight percent alkyl (meth)acrylate, 0.1 to 15 weight percent (meth)acrylate-containing carboxylic acid, and 0.1 to 5 weight percent crosslinking agent based on the total weight of the polymerizable components.

5. The (meth)acrylate copolymer of any one of claims 1 to 4, further comprising monomeric units derived from a non-acidic polar monomer.

6. The (meth)acrylate copolymer of claim 5, wherein the non-acidic polar monomer is a nitrogen-containing monomer having a primary amido group, a secondary amido group, a tertiary amido group, or an amino group.

7. The (meth)acrylate copolymer of claim 5 or 6 wherein the amount of the non-acidic polar monomer is no greater than 20 weight percent based on a total weight of the polymerizable components.

8. An adhesive composition comprising a (meth)acrylate copolymer according to any one of claims 1 to 7.

9. The adhesive composition of claim 8, wherein the adhesive composition is a pressure-sensitive adhesive.

10. The adhesive composition of claim 9, wherein the adhesive composition exhibits
(1) a 180-degree peel adhesion at 23°C at 12.6 inches per minute (32 centimeters/minute (cm/min)) of at least 0.3 N/mm on polyethylene terephthalate, at least 0.3 N/mm on glass, at least 0.3 N/mm on polycarbonate, and at least 0.5 N/mm on stainless steel with an adhesive thickness of 35 micrometers; and
(2) shear storage modulus no greater than 2000 kPa at -20°C and no greater than 50 kPa at 23°C
wherein the 180-degree peel adhesion and the shear storage modulus are measured by the methods according to the description.

11. An article comprising a substrate and an adhesive composition of according to any one of claims 8 to 10 positioned adjacent to a substrate.

12. The article of claim 11, wherein the article is a transfer tape, a one-sided tape, a two-sided tape, or a die-cut adhesive article.

13. The article of claim 11, wherein the article is an electronic device incorporating the adhesive composition.

14. The article of claim 11, wherein the electronic device is flexible and/or foldable wherein flexible means that the electronic device can undergo roll up action with a bend radius of 200mm or less without failure or visible defects and wherein foldable means that the electronic device can undergo repeated flexing or folding up to 200,000 folds without failure or visible defects.

## Patentansprüche

1. Ein (Meth)acrylat-Copolymer, umfassend monomere Einheiten, die von polymerisierbaren Bestandteilen abgeleitet sind, umfassend:
ein (Meth)acrylatmakromer, umfassend 1) eine einzelne (Meth)acryloyloxygruppe und 2) eine Poly(ethylenoxid)gruppe, Poly(propylenoxid)gruppe oder Poly(ethylenoxid-co-propylenoxid)gruppe, wobei das (Meth)acylatmakromer ein zahlenmittleres Molekulargewicht nicht größer als 900 Dalton aufweist und in einer Menge von mindestens 5 Gewichtsprozent basierend auf einem Gesamtgewicht der polymerisierbaren Bestandteile vorhanden ist;
ein Alkyl(meth)acrylat; und
eine (meth)acrylathaltige Carbonsäure, die in einer Menge nicht größer als 15 Gewichtsprozent basierend auf dem Gesamtgewicht der polymerisierbaren Bestandteile vorhanden ist; und
ein Vernetzungsmittel, das ein multifunktionelles (Meth)acrylatmonomer, ein multifunktionelles Aziridin oder eine Kombination davon in einer Menge, die von 0,1 bis 5 Gewichtsprozent basierend auf einem Gesamtgewicht der polymerisierbaren Bestandteile reicht, ist; und
wobei das (Meth)acrylat-Copolymer eine Glasübergangstemperatur nicht größer als -15 °C aufweist, wobei die Glasübergangstemperatur durch das Verfahren gemäß der Beschreibung gemessen wird.

2. Das (Meth)acrylat-Copolymer nach Anspruch 1, wobei das (Meth)acrylat-Copolymer ein zahlenmittleres Molekülgewicht in einem Bereich von 350 bis 900 Dalton aufweist, wobei das zahlenmittlere Molekülgewicht durch das Verfahren gemäß der Beschreibung gemessen wird.

3. Das (Meth)acrylat-Copolymer nach Anspruch 1 oder 2, wobei das (Meth)acrylatmakromer eine Poly(ethylenoxid)gruppe aufweist.

4. Das (Meth)acrylat-Copolymer nach einem der Ansprüche 1 bis 3, wobei die polymerisierbaren Bestandteile zu 5 bis 60 Gewichtsprozent das (Meth)acrylatmakromer, zu 25 bis 95 Gewichtsprozent Alkyl(meth)acrylat, zu 0,1 bis 15 Gewichtsprozent (meth)acrylathaltige Carbonsäure und zu 0,1 bis 5 Gewichtsprozent Vernetzungsmittel basierend auf dem Gesamtgewicht der polymerisierbaren Bestandteile umfassen.

5. Das (Meth)acrylat-Copolymer nach einem der Ansprüche 1 bis 4, ferner umfassend monomere Einheiten, die von einem nicht sauren polaren Monomer abgeleitet sind.

6. Das (Meth)acrylat-Copolymer nach Anspruch 5, wobei das nicht saure polare Monomer ein stickstoffhaltiges Monomer, das eine primäre Amidogruppe, eine sekundäre Amidogruppe, eine tertiäre Am idogruppe oder eine Am inogruppe aufweist, ist.

7. Das (Meth)acrylat-Copolymer nach Anspruch 5 oder 6, wobei die Menge des nicht sauren polaren Monomers nicht größer als 20 Gewichtsprozent basierend auf einem Gesamtgewicht der polymerisierbaren Bestandteile ist.

8. Eine Klebstoffzusammensetzung, umfassend ein (Meth)acrylat-Copolymer nach einem der Ansprüche 1 bis 7.

9. Die Klebstoffzusammensetzung nach Anspruch 8, wobei die Klebstoffzusammensetzung ein Haftklebstoff ist.

10. Die Klebstoffzusammensetzung nach Anspruch 9, wobei die Klebstoffzusammensetzung zeigt
(1) eine 180-Grad-Schälhaftfestigkeit bei 23 °C bei 12,6 Zoll pro Minute (32 Zentimetern/Minute (cm/min)) von mindestens 0,3 N/mm auf Polyethylenterephthalat, mindestens 0,3 N/mm auf Glas, mindestens 0,3 N/mm auf Polycarbonat und mindestens 0,5 N/mm auf Edelstahl mit einer Klebstoffdicke von 35 Mikrometern; und
(2) einen Scherspeichermodul nicht größer als 2000 kPa bei -20 °C und nicht größer als 50 kPa bei 23 °C
wobei die 180-Grad-Schälhaftfestigkeit und der Scherspeichermodul durch die Verfahren gemäß der Beschreibung gemessen werden.

11. Ein Gegenstand, umfassend ein Substrat und eine Klebstoffzusammensetzung nach einem der Ansprüche 8 bis 10, die angrenzend an ein Substrat positioniert ist.

12. Der Gegenstand nach Anspruch 11, wobei der Gegenstand ein Transferband, ein einseitiges Band, ein doppelseitiges Band oder ein gestanzter Klebstoffgegenstand ist.

13. Der Gegenstand nach Anspruch 11, wobei der Gegenstand eine elektronische Vorrichtung, die die Klebstoffzusammensetzung beinhaltet, ist.

14. Der Gegenstand nach Anspruch 11, wobei die elektronische Vorrichtung flexibel und/oder falzbar ist, wobei flexibel bedeutet, dass die elektronische Vorrichtung eine Aufrolleinwirkung mit einem Biegeradius von 200 mm oder weniger ohne Versagen oder sichtbare Defekte durchlaufen kann und wobei falzbar bedeutet, dass die elektronische Vorrichtung wiederholtes Beugen oder Zusammenfalzen bis zu 200.000 Falze ohne Versagen oder sichtbare Defekte durchlaufen kann.

## Revendications

1. Copolymère de (méth)acrylate comprenant des motifs monomères dérivés de composants polymérisables comprenant :
un macromère de (méth)acrylate comprenant 1) un unique groupe (méth)acryloyloxy et 2) un groupe poly(oxyde d'éthylène), un groupe poly(oxyde de propylène), ou un groupe poly(oxyde d'éthylène-co-oxyde de propylène), le macromère de (méth)acrylate ayant une masse moléculaire moyenne en nombre non supérieure à 900 Daltons et étant présent en une quantité d'au moins 5 pour cent en poids sur la base d'un poids total des composants polymérisables ;
un (méth)acrylate d'alkyle ; et
un acide carboxylique contenant du (méth)acrylate présent en une quantité non supérieure à 15 pour cent en poids sur la base du poids total des composants polymérisables ; et
un agent de réticulation qui est un monomère de (méth)acrylate multifonctionnel, une aziridine multifonctionnelle, ou une combinaison de ceux-ci en une quantité comprise dans une plage allant de 0,1 à 5 pour cent en poids sur la base d'un poids total des composants polymérisables ; et
dans lequel le copolymère de (méth)acrylate a une température de transition vitreuse non supérieure à -15 °C, dans lequel la température de transition vitreuse est mesurée par la méthode selon la description.

2. Copolymère de (méth)acrylate selon la revendication 1, dans lequel le copolymère de (méth)acrylate a une masse moléculaire moyenne en nombre comprise dans une plage de 350 à 900 Daltons, dans lequel la masse moléculaire moyenne en nombre est mesurée par la méthode selon la description.

3. Copolymère de (méth)acrylate selon la revendication 1 ou 2, dans lequel le macromère de (méth)acrylate a un groupe poly(oxyde d'éthylène).

4. Copolymère de (méth)acrylate selon l'une quelconque des revendications 1 à 3, dans lequel les composants polymérisables comprennent 5 à 60 pour cent en poids du macromère de (méth)acrylate, 25 à 95 pour cent en poids de (méth)acrylate d'alkyle, 0,1 à 15 pour cent en poids d'acide carboxylique contenant du (méth)acrylate, et 0,1 à 5 pour cent en poids d'agent de réticulation sur la base du poids total des composants polymérisables.

5. Copolymère de (méth)acrylate selon l'une quelconque des revendications 1 à 4, comprenant en outre des motifs monomères dérivés d'un monomère polaire non acide.

6. Copolymère de (méth)acrylate selon la revendication 5, dans lequel le monomère polaire non acide est un monomère contenant de l'azote ayant un groupe amido primaire, un groupe amido secondaire, un groupe amido tertiaire, ou un groupe amino.

7. Copolymère de (méth)acrylate selon la revendication 5 ou 6 dans lequel la quantité du monomère polaire non acide n'est pas supérieure à 20 pour cent en poids sur la base d'un poids total des composants polymérisables.

8. Composition adhésive comprenant un copolymère de (méth)acrylate selon l'une quelconque des revendications 1 à 7.

9. Composition adhésive selon la revendication 8, dans laquelle la composition adhésive est un adhésif sensible à la pression.

10. Composition adhésive selon la revendication 9, dans laquelle la composition adhésive présente
(1) une adhésion par pelage à 180 degrés à 23 °C à 12,6 pouces par minute (32 centimètres/minute (cm/min)) d'au moins 0,3 N/mm sur du poly(téréphtalate d'éthylène), d'au moins 0,3 N/mm sur du verre, d'au moins 0,3 N/mm sur du polycarbonate, et d'au moins 0,5 N/mm sur de l'acier inoxydable avec une épaisseur d'adhésif de 35 micromètres ; et
(2) un module de conservation en cisaillement non supérieur à 2000 kPa à - 20 °C et non supérieure à 50 kPa à 23 °C
dans laquelle l'adhésion par pelage à 180 degrés et le module de conservation en cisaillement sont mesurés par les méthodes selon la description.

11. Article comprenant un substrat et une composition adhésive selon l'une quelconque des revendications 8 à 10 positionnée adjacente à un substrat.

12. Article selon la revendication 11, dans lequel l'article est un ruban de transfert, un ruban simple face, un ruban double face, ou un article adhésif découpé à l'emporte-pièce.

13. Article selon la revendication 11, dans lequel l'article est un dispositif électronique incorporant la composition adhésive.

14. Article selon la revendication 11, dans lequel le dispositif électronique est flexible et/ou pliable, dans lequel flexible signifie que le dispositif électronique peut subir une action d'enroulement avec un rayon de courbure de 200 mm ou moins sans défaillance ni défauts visibles et dans lequel pliable signifie que le dispositif électronique peut subir une flexion ou un pliage répétés jusqu'à 200 000 fois sans défaillance ni défauts visibles.
